# EUROPEAN PATENT APPLICATION

(11) **EP 2 489 839 A1**
(43) Date of publication of application: **22.08.2012**
(21) Application number: 11155064.6
(22) Date of filing: 18.02.2011
(51) Int. Cl.: F01K 11/04, F25B 3/00

(54) **Process and apparatus for generating work**

(71) Applicant: HELEOS TECHNOLOGY GMBH, 6300 Zug (CH)
(72) Inventor: Hoos, Frank, 3271 AH Mijnsheerenland (NL)
(74) Representative: De Vries & Metman

(57) **Abstract**

The invention relates to a process and apparatus (10) for generating work, the apparatus (10) comprising at least one circuit for processing a working fluid in a thermodynamic cycle and mounted in a frame (11A) rotatable about an axis of rotation (12), the at least one circuit comprising, a compressor (13) for increasing the pressure in the working fluid, one or more expanders (17) in, on or downstream from the compressor (13) and extending in a direction having a tangential component, at least one channel (22) for the working fluid, a heat exchanger (18) for heating the accelerating working fluid in the channel (22), and a turbine (16) for generating work.

## Description

Process for transferring heat from a first relatively cold medium to a second relatively hot medium and/or generating work by means of a thermodynamic cycle.

A heat engine acts by transferring energy from a heat source having a relatively high temperature to a heat sink having a relatively low temperature and, in the process, converting part of that energy to mechanical work. The cycle may also be reversed. The system may be worked upon by an external force, and in the process, it can transfer thermal energy from a cooler system to a warmer one, thereby acting as a heat pump rather than a heat engine. In general, the efficiency of heat engines increases with an increasing difference in temperature between the high temperature heat source and the low temperature heat sink.

It is an object of the present invention to provide a process for efficiently transferring heat and/or generating work, e.g. by means of a heat source having a comparatively low temperature.

To this end, the thermodynamic cycle comprises accelerating a working fluid through expansion, thus increasing velocity and decreasing pressure of the working fluid in accordance with Bernoulli's law,
further accelerating the working fluid by heating it, decelerating the working fluid, and
extracting heat from the fluid.

At least part of the heat extracted from the decelerated working fluid is at a higher temperature than the heat supplied to the accelerating working fluid.

To increase efficiency, in an embodiment, the process comprises (internally) exchanging heat between the relatively hot decelerated fluid and the relatively cold accelerating fluid.

In a further embodiment, after heating the fluid with heat extracted from the decelerated fluid, the working fluid is further heated with heat from an external source, such as exhaust gasses from an industrial process or, if the operating temperature of the process is sufficiently low, environmental heat.

Internal heat transfer and heat input into the cycle from an external source can be increased by heating the working fluid with a two phase heat transfer fluid, i.e. through latent heat.

To be able to carry out the cycle in a more compact apparatus, in an embodiment, the process for generating work comprises: rotating a contained amount of the working fluid about an axis of rotation, compressing the working fluid in a direction away from the axis of rotation, accelerating, e.g. expanding the fluid in a direction having a tangential component, i.e. a component in circumferential direction, heating and thus further accelerating the working fluid, and converting at least part of the kinetic energy of the (accelerated) working fluid into work.

In an embodiment, during heating, the working fluid flows through a channel and the circumferential velocity of the channel increases in downstream direction to match the velocity of the accelerating fluid to within 20%, preferably to within 10%, more preferably to within 5%. Thus, the velocity of the fluid relative to the wall of the channel and the resulting flow resistance are kept low, increasing the overall efficiency of the process.

In an embodiment, the working fluid is heated and its velocity increased in a plurality of rotating stages.

The invention further relates to an apparatus for generating work comprising at least one circuit for processing a working fluid in a thermodynamic cycle and mounted in a frame rotatable about an axis of rotation, the at least one circuit comprising a compressor for increasing the pressure in the working fluid, one or more expanders, e.g. nozzles, in, on or downstream from the compressor and extending in a direction having a tangential component, a channel for the working fluid, a heat exchanger for heating the accelerating working fluid in the channel, and a turbine for generating work.

In an embodiment, the apparatus comprises a second heat exchanger located relatively near the axis of rotation which second heat exchanger communicates with the first heat exchanger to transfer heat from the working fluid in the at least one circuit relatively close to the axis of rotation to the accelerating working fluid relatively far from the axis of rotation and/or a further heat exchanger for heating the accelerating working fluid with heat from an external source.

In a further embodiment, the at least one channel for the working fluid and/or the heat exchanger for heating the accelerating working fluid in the channel is helical.

In a further embodiment, in downstream direction, the diameter of the turns of the helical channel increases and/or the pitch of the turns decreases.

In yet a further embodiment, the at least one channel and the (first) heat exchanger comprises a plurality of stages rotatable at different velocities.

In another embodiment, the temperature of the heat supplied to the working fluid is increased, e.g. by means of a process as described in international patent application PCT/EP2009/058426 (publication number WO2010/000840).

In a more specific embodiment, the main process described above is coupled to one or more auxiliary processes, involving rotating a contained amount of a compressible auxiliary working fluid, typically a gas, about an axis of rotation, thus compressing the auxiliary working fluid in a direction away from the axis of rotation, transferring heat from the compressed auxiliary working fluid to the accelerating working fluid of the main process, expanding the auxiliary working fluid in a direction towards the axis of rotation of the auxiliary process, and withdrawing heat from the decelerated working fluid of the main process or an external source, preferably while at least substantially preventing heat transfer between the expanded auxiliary working fluid and the compressed auxiliary working fluid.

In an embodiment, the working fluid is compressible, e.g. a supercritical fluid or a gas, and preferably a single phase gas. Examples of the compressible working fluid include carbon dioxide, alkyl halides, e.g. methane or ethane with one or more halogens, such as chlorine or fluorine, e.g. CF₄, or a gas of a mono-atomic element or a mixture of mono-atomic elements having an atomic number (Z) ≥ 18, such as Argon, Krypton, and Xenon.

The heat transfer fluid e.g. contains or consists of water, an alcohol, in particular methanol, ethanol or isopropyl alcohol, a ketone, such as acetone, ammonia, a mixture of water and ammonia or water and methanol, hydrocarbons, such as propane and butane, or another gas, such as hydrogen or helium.

Within the framework of the present invention the term "turbine" includes any device or structure suitable for generating work from the accelerated fluid.

For the sake of completeness, it is noted that US 4,285,202 relates to industrial processes for energy conversion involving at least one step which consists in acting on the presence of a working fluid in such a manner as to produce either compression or expansion.

US 4,107,944 relates to a method and apparatus for generating heating and cooling by circulating a working fluid within passageways carried by rotors, compressing said working fluid therewithin and removing heat from said working fluid in a heat removal heat exchanger and adding heat into said working fluid in a heat addition heat exchanger, all carried by said rotors.

US 4,005,587 relates to a method and apparatus for transport of heat from a low temperature heat source into a higher temperature heated sink, using a compressible working fluid compressed by centrifugal force within a rotating rotor with an accompanying temperature increase. Heat is transferred from the heated working fluid into the heat sink at higher temperature, and heat is added into the working fluid after expansion and cooling from a colder heat source. Cooling is provided within the rotor to control the working fluid density, to assist working fluid circulation.

Similar methods and apparatuses are known from US 3,828,573, US 3,933,008, US 4,060,989, and US 3,931,713.

WO 2006/119946 relates to device (70) and method for transferring heat from a first zone (71) to a second zone (72) using mobile (often gaseous or vaporous) atoms or molecules (4) in which in one embodiment, the chaotic motion of the atoms/molecules which usually frustrates the transfer of heat by simple molecular motion is overcome by using preferably elongated nanosized constraints (33). JP 61165590 and JP 58035388 relate to rotary-type heat pipes. US 3,902,549 relates to a rotor mounted for high-speed rotation.

US 3,470,704 relates to a thermodynamic apparatus comprising, as shown in Figure 2 of US 3,470,704, tubes (37) each in turn comprising sections (51; 38, 40, 42) functioning as a thermodynamic pump and sections (53; 46, 48, 50) functioning as a refrigerator.

The invention will now be explained in more detail with reference to examples of the process and apparatus according to the present invention, shown in the attached Figures.
Figure 1 is a schematic illustration of the thermodynamic cycle according to the present invention.
Figure 2 is a cross-section of a first power rotor according to the present invention.
Figures 3 to 4B are perspective views and details of a second power rotor according to the present invention.

Details not necessary for understanding the invention may have been omitted. Elements performing the same or substantially the same function are indicated by the same reference number.

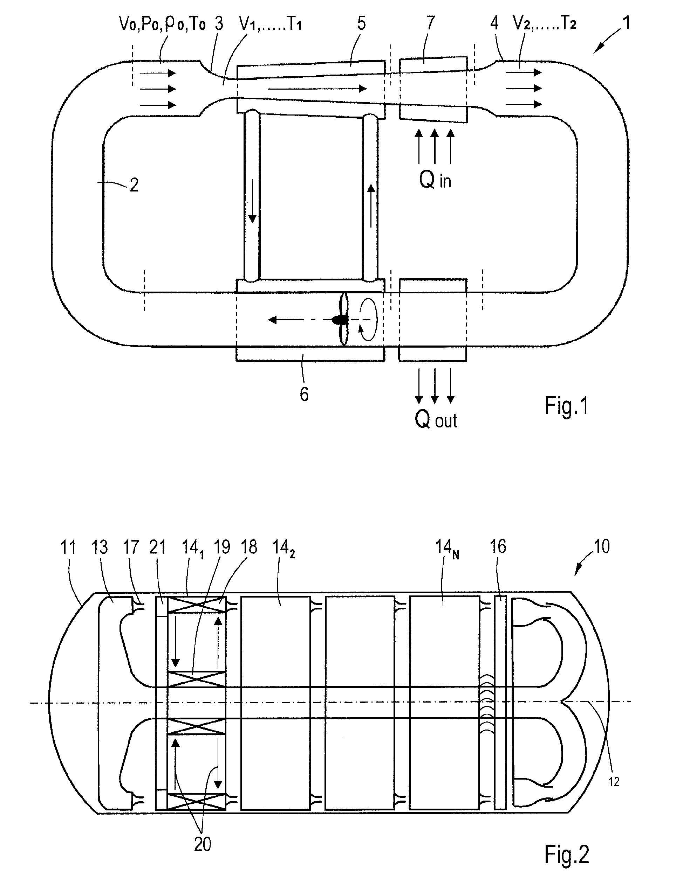

Figure 1 shows thermodynamic cycle 1 according to the present invention. In this cycle, a working fluid flowing through a channel 2 at an initial velocity (V₀), pressure (P₀), density (ρ₀), and temperature (T₀), is accelerated, i.c. by a reduction 3 of the cross-sectional area of the channel 2. Acceleration results is increased velocity (V₁) and decreased pressure (P₁), density (ρ₁), and temperature (T₁), in accordance with Bernoulli's law.

The accelerated working fluid is subsequently heated by means of a medium at a first temperature (T_{Qin} > T₁) thus further increasing its velocity. In this example, the cross-section of the channel gradually increases such that the pressure of the gas remains substantially constant during heating and resulting acceleration.

Then, the working fluid is decelerated, i.c. by a widening 4 of the cross-sectional area of the channel, to a state wherein pressure (P₂) and kinetic energy (½ρ₂V₂^2) are equal to initial pressure (P₀) and initial kinetic energy (½ρ₀V₀^2) and, in accordance with to Bernoulli's law, temperature is higher than initial temperature (T₂ > T₁).

Finally, heat having a relatively high temperature (T_{Qout} > T_{Qin}) is recovered from the cycle. This heat can be employed, e.g., for heating buildings or generating work.

In this example, the heat employed to further accelerate the working fluid is supplied by first and second heat exchangers 5, 6 for exchanging heat between the decelerated fluid and the accelerating fluid and (primarily) by a third heat exchanger 7 communicating with an external source, such as exhaust gasses from an industrial process.

Figure 2 shows a cross-section of a first apparatus 10 according to the present invention comprising a static base frame (not shown) and a rotor 11, mounted, rotatable about its longitudinal axis 12, e.g. by means of suitable bearings, such as ball bearings, in the base frame. The rotor 11 suitably has a diameter in a range from 0,5 to 10 meters, in this example 5 meters. The wall of the rotor 11 is thermally insulated in a manner known in itself. The apparatus 10 further comprises a power take off (not shown and known in itself) to drive other equipment, e.g. an electric generator, and optionally to start the apparatus.

The rotor 11 contains a plurality of rotary stages, including a compressor 13 for increasing the pressure in the working fluid, a plurality of heat exchanger stages 14₁ - 14_{N} for heating the accelerating working fluid, and a turbine 16 for generating work.

More specifically, the compressor 13 comprises radially extending curved channels 13A for centrifugally compressing the working fluid and, at its downstream end, a plurality of nozzles 17 for subsequently expanding and thus accelerating the compressed working fluid and directing it in a combined axial and tangential (circumferential) direction.

Located downstream from the compressor is the first rotary heat exchanger stage 14₁ comprising a plurality of intertwined helical channels (not shown) for the working fluid having a pitch that decreases in downstream direction. The stage further comprises a first heat exchanger 18 for heating the accelerating working fluid in the channels, a second heat exchanger 19 located relatively near the axis of rotation and ducts 20 for a heat transfer fluid. Each channel comprises a port 21 for receiving the expanding working fluid from the nozzles 17 and located at the same radial distance from the axis of rotation.

In this example, the pitch of the helical channels gradually decreases in downstream direction, i.e. the tangential component of the channels gradually increases. The decreasing pitch and the increasing rotational velocities serve to match the circumferential velocity of the accelerating fluid to within 10%.

Located downstream from the first rotary heat exchanger stage 14₁ are a plurality of further heat exchanger stages 14_{N} that are substantially identical to the first stage, but operated at increasing rotational velocities. Also, stages 14 most downstream comprise a heat exchanger for heating the accelerating working fluid with heat from an external source.

Located downstream from the heat exchanger stages is the turbine 16 for generating work. Work generated in the turbine is employed to rotationally drive the rotor and is transmitted from the apparatus to other equipment by means of the power take off.

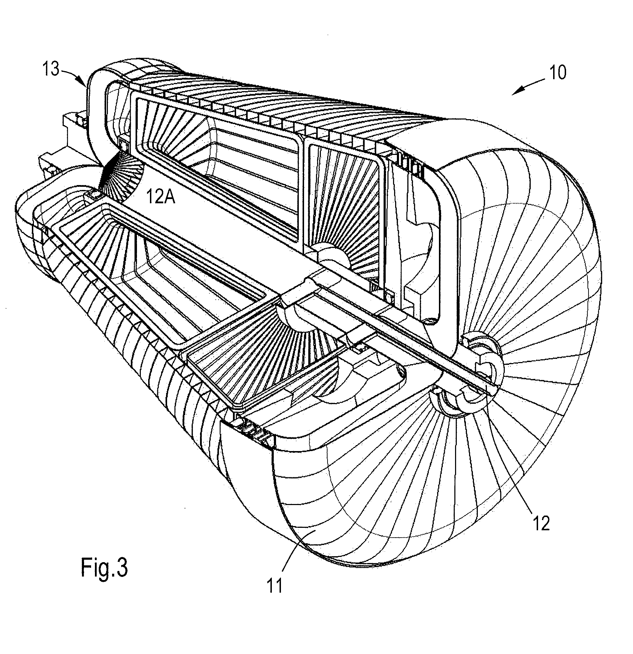

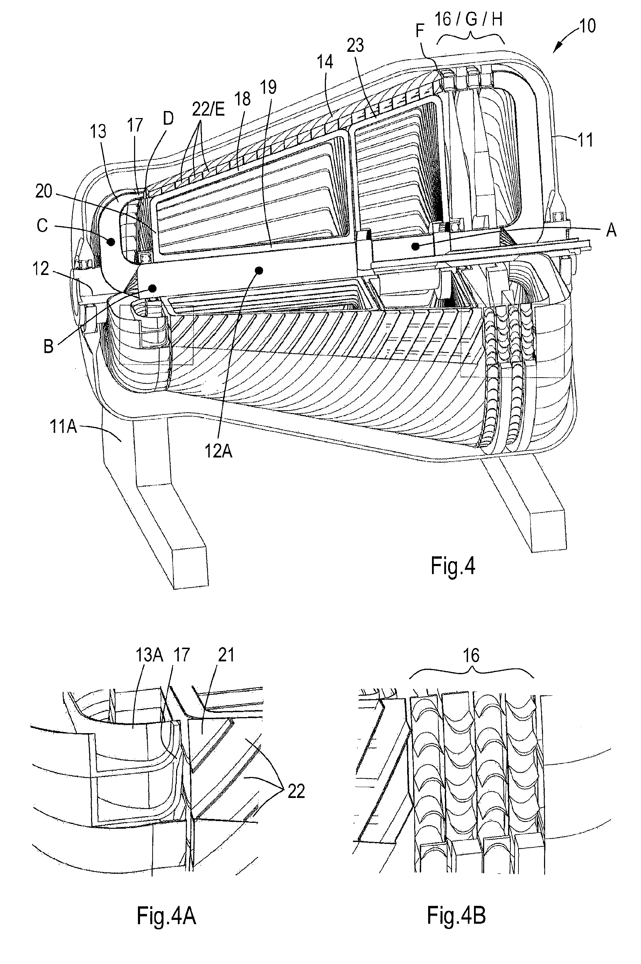

Figure 3 shows a cross-section of a second apparatus 10 according to the present invention, again comprising a static base frame 11A (Figure 4), firmly positioned on a floor, and a rotor 11, mounted, rotatable about its longitudinal axis 12, in the base frame 11A. The rotor 11 is frusto-conical and diverging in downstream direction. Unless specified otherwise, the features of this apparatus are substantially the same as corresponding features of the apparatus shown in Figure 2.

The rotor 11 contains a compressor 13 comprising radially extending curved channels 13A for centrifugally compressing the working fluid and, at its downstream end, a plurality of nozzles 17 for expanding and thus accelerating the working fluid and directing it in tangential (circumferential) direction with no or only a small axial component.

Located downstream from the compressor 13 is a rotary heat exchanger stage 14 comprising a plurality of intertwined helical channels 22 for the working fluid. Each channel 22 comprises a port 21 for receiving the expanding working fluid from the nozzles 17 and is, to that end, located at the same radial distance from the axis of rotation as the nozzles 17.

In this example, the diameter of the turns of the helical channels gradually increases in downstream direction to continually match the circumferential velocity of the walls of the channels to the velocity of the accelerating fluid to within 5%.

The heat exchanger stage 14 further comprises a first heat exchanger 18 for heating the accelerating working fluid in the channels 22, a second heat 19 exchanger located relatively near the axis of rotation 12, which typically comprises a central duct 12A, and ducts 20 for a heat transfer fluid. The heat exchanger stage 14 further comprises a third heat exchanger 23 for heating the accelerating working fluid with heat from an external source.

Located downstream from the heat exchanger stage 14 is a two stage turbine 16 for generating work. Work generated in the turbine is employed to rotationally drive the rotor and is transmitted from the apparatus to other equipment by means of the power take off.

During operation, quantified in the attached Table, the working gas, in this example carbon dioxide, entering the central shaft 12A (position A in Figure 4 and the Table) is cooled inside the shaft by means of the second heat exchanger (A > B). After cooling, the working gas is compressed by centrifugal forces (B > C) in a direction away from the axis of rotation, thus increasing temperature, pressure, and density of the working gas. Directly after compression (C), the working gas is expanded (C > D) isentropically in tangential direction, thus converting pressure to velocity and lowering the temperature of the working gas to a temperature below that of the gas in the central shaft, to enable internal heat transfer.

The expanded gas enters the intertwined channels and, whilst flowing through the channels, is heated at a substantially constant pressure, i.e. the working fluid is further accelerated by heating (D > E).

Subsequently, the working fluid is decelerated isentropically (E > F), thus converting velocity to pressure, and expanded (F > G > H) over the turbine to generate work.

The process according to the present invention enables generating high temperature heat and/or work from heat having a relatively low temperature.

The invention is not restricted to the above-described embodiments, which can be varied in a number of ways within the scope of the claims.

## Claims

1. Process for transferring heat from a first relatively cold medium to a second relatively hot medium and/or generating work by means of a thermodynamic cycle, the cycle comprising
accelerating a working fluid through expansion,
further accelerating the working fluid by heating it, decelerating the working fluid, and
extracting heat from the decelerated fluid.

2. Process according to claim 1, comprising exchanging heat between the decelerated fluid and the accelerating fluid.

3. Process according to claim 2, comprising, after heating the fluid with heat extracted from the decelerated fluid, further heating the working fluid with heat from an external source.

4. Process according to claim 2 or 3, comprising heating the working fluid by means of a two phase heat transfer fluid.

5. Process for generating work according any one of the preceding claims comprising,
rotating a contained amount of the working fluid about an axis of rotation,
compressing the working fluid in a direction away from the axis of rotation,
accelerating the fluid through expansion and in a direction having a tangential component,
heating the working fluid, and
converting at least part of the kinetic energy of the fluid into work.

6. Process according to any one of the preceding claims, wherein heating the accelerating working fluid is performed substantially isobaricaly.

7. Process according to any one of the preceding claims, wherein, during heating, the working fluid flows through a channel and the circumferential velocity of the channel increases in downstream direction to match the velocity of the accelerating fluid to within 20%, preferably to within 10%, more preferably to within 5%.

8. Process according to any one of claims 5-7, wherein, during heating, the tangential component of the velocity of the fluid is gradually increased relative to its axial component.

9. Process according to any one of claims 5-8, wherein the working fluid is heated and its velocity increased in a plurality of rotating stages.

10. Process according to any one of the preceding claims, wherein the working fluid is compressible and preferably a gas.

11. Apparatus (10) for generating work comprising at least one circuit for processing a working fluid in a thermodynamic cycle (1) and mounted in a frame (11A) rotatable about an axis of rotation (12), the at least one circuit comprising,
a compressor (13) for increasing the pressure in the working fluid,
one or more expanders (17) in, on or downstream from the compressor (13) and extending in a direction having a tangential component,
at least one channel (22) for the working fluid,
a heat exchanger (18) for heating the accelerating working fluid in the channel (22), and
a turbine (16) for generating work.

12. Apparatus (10) according to claim 11, comprising a second heat exchanger (19) located relatively near the axis of rotation (12) which second heat exchanger (19) communicates with the first heat exchanger (18) to transfer heat from the working fluid in the at least one circuit relatively close to the axis of rotation (12) to the accelerating working fluid relatively far from the axis of rotation (12) and/or a further heat exchanger (23) for heating the accelerating working fluid with heat from an external source.

13. Apparatus (10) according to claim 11 or 12, wherein the at least one channel (22) for the working fluid and/or the heat exchanger(18) for heating the accelerating working fluid in the channel (22) are helical.

14. Apparatus (10) according to any one of claims 11-13, wherein, in downstream direction, the diameter of the turns of the helical channel (22) increases and/or the pitch of the turns decreases.

15. Apparatus (10) according to any one of claims 11-14, wherein the channel (22) for the working fluid and the (first) heat exchanger (18) comprise a plurality of rotatable stages (14).
